# EUROPÄISCHE PATENTSCHRIFT

(11) **EP 2 276 960 B1**
(45) Veröffentlichungstag und Bekanntmachung des Hinweises auf die Patenterteilung: **05.06.2013**
(21) Anmeldenummer: 08846210.6
(22) Anmeldetag: 23.10.2008
(51) Int. Cl.: F16L 37/12, F16L 33/207

(54) **ANSCHLUSS- UND VERBINDUNGSVORRICHTUNG FÜR HOCHDRUCKLEITUNGEN**
JOINING AND CONNECTING DEVICE FOR HIGH-PRESSURE LINES
DISPOSITIF DE RACCORDEMENT ET DE CONNEXION POUR CONDUITES HAUTE PRESSION

(30) Priorität: 15.05.2008 DE 202008006612 U
(43) Veröffentlichungstag der Anmeldung: 26.01.2011
(73) Patentinhaber: Parker Hannifin GmbH & Co. KG, 33659 Bielefeld (DE)
(72) Erfinder: WEINHANDL, Franz, 8484 Weisslingen (CH); LEVIN, Maxim, 69469 Weinheim (DE)
(74) Vertreter: Becker, Thomas
(86) Internationale Anmeldenummer: PCT/EP2008/008953
(87) Internationale Veröffentlichungsnummer: WO 2009/138113

(56) Entgegenhaltungen:
- EP-A- 0 836 043
- DE-A1- 19 940 147
- DE-C1- 19 939 161
- DE-U1-202004 002 063
- DE-U1-202006 007 315
- DE-U1-202006 015 598
- US-A- 3 930 674
- US-A1- 2002 195 820

## Beschreibung

Die Erfindung betrifft eine Anschluss- und Verbindungsvorrichtung für Hochdruckleitungen zum Anschluss einer Schlauchleitung an eine weitere Schlauchleitung oder an ein Hochdruckarbeitsgerät, wobei das Ende der Schlauchleitung mit einer Schlaucharmatur versehen ist, die aus einem in die Innenseele eines Schlauchkörpers einschiebbaren Nippel und einer auf die Außenseite des Schlauchkörpers aufgesetzten, mit dem Nippel verbindbaren und auf den Schlauchkörper aufpressbaren Hülse besteht, wobei die mit dem Schlauchkörper verbundene Schlaucharmatur einen radial abstehenden Flanschring aufweist und das aus dem Schlauchkörper hervorstehende Ende des Nippels eine auf seinem äußeren Umfang aufgesetzte Dichtung aufweist und gemeinsam mit der Dichtung in eine Aufnahmebuchse einsteckbar ist und die Aufnahmebuchse und der radial abstehende Flanschring von zwei Aufnahmebuchse und Flanschring außen umfassenden Halbschalen als Anschluss- und Verbindungsvorrichtung umfasst sind und wobei eine der Aufnahme des Flanschringes dienende Ausnehmung in den Halbschalen derart bemessen ist, dass eine axiale Bewegung des Schlauchendes mit daran angebrachter Schlaucharmatur zwischen einer Freigabestellung und einer durch formschlüssigen Eingriff des Flanschringes mit einer stirnseitig an den Halbschalen ausgebildeten Aufnahmegestaltung gebildeten Verriegelungsstellung für die Halbschalen ermöglicht ist.

Eine Anschluss- und Verbindungsvorrichtung mit den vorgenannten Merkmalen ist in der EP 0 836 043 A1 beschrieben, wobei die aus der vorgenannten Druckschrift bekannten Schlaucharmaturen mit einem Nippel zur Verbindung mit entsprechenden Schlaucharmaturen anderer Schläuche oder auch mit einem Arbeitsgerät herangezogen werden können. Bei der bekannten Anschluss- und Verbindungsvorrichtung ist bereits eine sichere Verriegelung der Anschluss- und Verbindungsvorrichtung durch die Beaufschlagung der Schlauchleitung mit dem entsprechenden Hochdruck bewirkt, indem der entsprechende Flanschring der Schlauchgarnitur in dem von den Halbschalen umschlossenen Raum axial in einen formschlüssigen Eingriff mit den Halbschalen verschoben wird derart, dass die Halbschalen nicht mehr von der unter Druck stehenden Schlaucharmatur abgenommen werden können. Eine Demontage der Anschluss- und Verbindungsvorrichtung dagegen ist in einfacher Weise in drucklosem Zustand möglich, weil dann die betreffende Schlaucharmatur soweit im Inneren der Halbschalen zu verschieben ist, bis der Flanschring außer Eingriff mit den Halbschalen kommt und diese nach außen abgenommen werden können.

Mit der bekannten Anschluss- und Verbindungsvorrichtung ist noch der Nachteil eines axial ausladenden Aufbaus verbunden, weil die für die Verbindung des Nippels mit dem Schlauchkörper erforderliche äußere Presshülse deutlich von den die Kopplung der beiden Nippel von den miteinander zu verbindenden Schlauchenden bewirkenden Halbschalen beabstandet ist.

Der Erfindung liegt die Aufgabe zugrunde, eine Anschluss- und Verbindungsvorrichtung mit den gattungsgemäßen Merkmalen derart weiter zu bilden, dass sie in Axialrichtung einen kompakteren Aufbau aufweist. Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht im einzelnen vor, dass die beiden Halbschalen zusätzlich zu der Aufnahmebuchse und dem Flanschring einen an den Flanschring anschließenden Abschnitt der äußeren Hülse außen umfassen.

Mit der Erfindung ist der Vorteil verbunden, dass durch die Einbeziehung wenigstens einer äußeren Hülse in die Anschluss- und Verbindungsvorrichtung ein in Axialrichtung kompakter Aufbau der Anschluss- und Verbindungsvorrichtung verwirklicht ist.

Nach einem Ausführungsbeispiel der Erfindung ist vorgesehen, dass der Flanschring mit einem axial in Richtung des Schlauchkörpers vorstehenden Vorsprung in eine stirnseitig in den Halbschalen ausgebildete Nut als Aufnahmegestaltung eingreift. Durch die so ausgebildete Nut/Feder-Verbindung wird ein Auseinanderklappen der Halbschalen bei in der Nut befindlichen Vorsprung des Flanschringes verhindert.

Nach einem ersten Ausführungsbeispiel der Erfindung kann vorgesehen sein, dass der Flanschring an dem stirnseitigen Ende der Hülse angebracht ist, wobei der Flanschring einstückiger Bestandteil der Hülse sein kann.

In einer alternativen Ausführungsform ist vorgesehen, dass der Flanschring an einem aus dem Schlauchkörper hervorstehenden Bereich des Nippels zwischen der Hülse und der Aufnahmebuchse angebracht ist. Hierbei kann der Flanschring beispielsweise an dem Nippel angeschweißt oder in sonstiger Weise befestigt sein.

Soweit nach einem Ausführungsbeispiel der Erfindung vorgesehen ist, dass die Aufnahmebuchse eine solche Länge aufweist, dass das die Dichtung aufweisende vordere Ende des Nippels sowohl in der Freigabestellung als auch in der Verriegelungsstellung im Inneren der Aufnahmebuchse gelegen ist, ist damit gewährleistet, dass in jeder Stellung der Schlaucharmatur innerhalb des von den Halbschalen umschlossenen Aufnahmeraumes eine sichere Abdichtung des Nippels gegen die Aufnahmebuchse gegeben ist.

In einer ersten Ausführungsform der Erfindung reicht es aus, wenn nach dem Schließen der Halbschalen durch axiales Verschieben des Schlauchendes mit Schlaucharmatur der in der Aufnahmeausnehmung liegende Flanschring in formschlüssigen Eingriff mit den Halbschalen gebracht wird. Wird danach die Anschluss- und Verbindungsvorrichtung unter Druck gesetzt, wird dieser Verriegelungszustand sicher aufrechterhalten.

Zusätzlich können aber weitere Mittel zur Fixierung der Halbschalen in ihrer geschlossenen Stellung aneinander vorgesehen sein.

So kann nach einem ersten Ausführungsbeispiel der Erfindung vorgesehen sein, dass die beiden Aufnahmebuchse und Flanschring umgreifenden Halbschalen mittels einer auf ihrem äußeren Umfang aufgesetzten gebogenen Federklammer in ihrer geschlossenen Stellung zusammengehalten sind, wobei vorgesehen sein kann, dass die Halbschalen jeweils eine Einziehung zur bündigen Aufnahme der gebogenen Federklammer aufweisen. Hiermit ist sichergestellt, dass die Federklammern nicht über den äußeren Umfang der Anschluss- und Verbindungsvorrichtung vorstehen.

In einer alternativen Ausführungsform kann vorgesehen sein, dass die Halbschalen mittels an ihren äußeren Enden radial durchgesteckter U-förmiger Federstecker in ihrer geschlossenen Stellung zusammengehalten sind.

In einer wiederum alternativen Ausführungsform kann vorgesehen sein, dass die Halbschalen mittels eines außenliegenden Scharniers in ihrer geschlossenen Stellung zusammengehalten sind. Hierbei kann in einer Weiterbildung vorgesehen sein, dass an der Scharnierachse des Scharniers die Halbschalen jeweils in ihre geschlossene Stellung vorspannende und mit den Halbschalen verbundene Federblätter gehaltert sind.

Gemäß einer weiteren Ausführungsform der Erfindung kann zum Zusammenhalten der beiden Halbschalen wiederum eine gebogene Federklammer vorgesehen sein, die mit ihrem einen Ende an der Scharnierachse eines entsprechend vorgesehenen Scharniers gehaltert ist. Diese Scharnierachse kann an den beiden Halbschalen mittels jeweils daran angebrachter, vorzugsweise damit verschweißter Scharnierbänder festgelegt sein.

Nach einem Ausführungsbeispiel der Erfindung ist weiterhin vorgesehen, dass die Aufnahmebuchse formschlüssig von den Halbschalen umgriffen und darin axial unverschieblich festgelegt ist.

Soweit die erfindungsgemäße Anschluss- und Verbindungsvorrichtung zur Verbindung zweier Schlauchleitungen vorgesehen ist, ist nach einem Ausführungsbeispiel der Erfindung vorgesehen, dass die Halbschalen die Flanschringe der beiden Schlaucharmaturen der zu verbindenden Schlauchleitungen einschließlich der dazwischen angeordneten Aufnahmebuchse mit den darin eingeschobenen Nippeln umgreifen und aneinander halten.

Soweit die entsprechende Vorrichtung zum Anschluss einer Schlauchleitung an einem Hochdruckarbeitsgerät vorgesehen ist, ist die entsprechende Verbindung dadurch verwirklicht, dass die Aufnahmebuchse mit dem Arbeitsgerät verbunden und die Halbschalen in ihrer geschlossenen Stellung axial unverschieblich an der Aufnahmebuchse oder an dem Arbeitsgerät festgelegt sind.

Gemäß einem weiteren Ausführungsbeispiel der Erfindung ist zum Anschluss einer Schlauchleitung wiederum an ein Hochdruckarbeitsgerät oder aber auch an eine einen standardisierten Schraubanschluss aufweisende weitere Schlauchleitung vorgesehen, dass die Aufnahmebuchse als mit dem Arbeitsgerät oder dem Schraubanschluss verbindbarer Adapter ausgebildet ist, wobei nun der entsprechende Flanschring an dem stirnseitigen Ende des Adapters, vorzugsweise einstückig, ausgebildet ist, wobei der an dem Adapter angebrachte Flanschring gemeinsam mit dem Flanschring der mit der anzuschließenden Schlauchleitung verbundenen Schlaucharmatur von den Halbschalen umgriffen ist. In jeweils alternativen Ausführungsbeispielen dazu kann vorgesehen sein, dass an dem freien Anschlussende des Adapters ein Außengewinde zum Einschrauben des Adapters in einen beispielsweise an einem Arbeitsgerät ausgebildeten Anschluss oder alternativ ein Innengewinde zum Anschließen des standardisierten Schraubanschlusses einer Schlauchleitung ausgebildet sein.

Soweit es zum Schutz der Anschluss- und Verbindungsvorrichtung in an sich bekannter Weise erforderlich ist, die offenen Enden der Schlaucharmaturen mittels einer Schutzkappe zu verschließen, besteht das Problem, dass bei montierten Schlauchleitungen die Schutzkappen an den Schlaucharmaturen aufbewahrt sein sollen, um bei einer weiteren Handhabung der Schlaucharmaturen die Verschluss- bzw. Schutzmöglichkeit wieder nutzen zu können. Hierzu ist nach einem Ausführungsbeispiel der Erfindung vorgesehen, dass eine an der Schlaucharmatur abnehmbar gehalterte Schutzkappe zum Abdecken des offenen Endes der Schlaucharmatur vorgesehen ist, und die hutförmige Schutzkappe einen Schutzbereich zum axialen umschließenden Aufstecken auf das offene Ende der Schlaucharmatur und einen an den Schutzbereich axial anschließenden Haltebereich mit einem nach außen ausgewölbten Wandungsbereich zum radialen Aufstecken der Schutzkappe auf den äußeren Umfang eines Abschnitts der Hülse der Schlaucharmatur aufweist. Hiermit ist der Vorteil verbunden, dass die mit ihrem Schutzbereich auf das offene Ende der Schlaucharmatur aufgesteckte Schutzkappe bei der Montage der Schlaucharmatur abgenommen und durch Aufstecken an der Schlaucharmatur selbst gehaltert werden kann und somit nicht verloren geht.

Hinsichtlich der Ausbildung des Schutzbereiches kann vorgesehen sein, dass der Schutzbereich aus einem innenseitig von dem geschlossenen Deckelbereich vorspringenden Ansatz zum Aufstecken auf das Ende der Schlaucharmatur besteht, wobei die Haltefunktion der Schutzkappe dadurch realisiert sein kann, dass die nach außen ausgewölbten Wandungsbereiche der Schutzkappe federnd ausgebildet sind.

In einer Weiterbildung der Anschluss- und Verbindungsvorrichtung mit einer daran festgelegten Schutzkappe ist nach einem Ausführungsbeispiel vorgesehen, dass die nach der Montage der Schlaucharmatur darauf aufgesteckte Schutzkappe auch dazu herangezogen wird, eine zusätzliche Sicherung gegen ein Lösen der Anschluss- und Verbindungsvorrichtung auszubilden, wobei hierzu vorgesehen ist, dass die hutförmige Schutzkappe mittels jeweils eines an der Innenseite ihrer Wandungsbereiche angeordneten und in eine auf der Außenseite der Hülse ausgebildete Nut eingreifenden Vorsprungs in ihrer auf die Schlaucharmatur aufgesteckten Lage axial fixiert und die Nut derart angeordnet ist, dass eine axiale Verschiebung der Schlaucharmatur mit der darauf aufgesteckten Schutzkappe zu den Halbschalen hin ausgeschlossen ist. Da es zum Lösen der Anschluss- und Verbindungsvorrichtung erforderlich ist, die betreffende Schlaucharmatur axial in das Innere der Halbschalen hinein zu verschieben, bis der Flanschring außer Eingriff mit den Halbschalen kommt, ist mittels der aufgesteckten und axial fixierten Schutzkappe eine zusätzliche Sicherung der Anschluss- und Verbindungsvorrichtung in ihrer Verbindungsstellung verwirklicht, soweit die betreffende Schlaucharmatur nicht axial verschiebbar ist.

Je nach Verwendung der Anschluss- und Verbindungsvorrichtung insbesondere für Hochdruckschläuche kann auch die zusätzliche Anordnung eines über den Hochdruckschlauch außen geschobenen Schutzschlauches vorgesehen sein, wie ein solcher Schutzschlauch in der WO 2006/002459 A1 beschrieben ist. Hierbei besteht eine Problematik darin, das jeweilige Ende des Schutzschlauches im Bereich der Schlaucharmatur beziehungsweise der Anschluss- und Verbindungsvorrichtung zu befestigen, wobei die Befestigung der Schutzschläuche üblicherweise im Bereich der Nippel der Schlaucharmaturen erfolgt. Soweit diese Nippel aber dem Risiko eines Abbrechens unterliegen, kann der Schutzschlauch in einem solchen Fall seine vorgesehene Schutzfunktion nicht erfüllen. Auch im Hinblick auf die Befestigung des Schutzschlauches bietet die erfindungsgemäße Ausgestaltung der Anschluss- und Verbindungsvorrichtung einen zweckmäßigen Ansatzpunkt, und somit ist nach einem Ausführungsbeispiel der Erfindung vorgesehen, dass ein die Hochdruckleitung mit der daran angeschlossenen Schlaucharmatur außen umfassender Schutzschlauch vorgesehen ist, der mit seinem zugeordneten Ende über den von den Halbschalen hervorstehenden Bereich der Hülse der Schlaucharmatur geschoben und darauf mittels einer außen aufgebrachten Presshülse festgelegt ist, und dass die Breite der Schutzkappe und die Lage der auf der Hülse angebrachten Presshülse derart aufeinander abgestimmt sind, dass die Schutzkappe zwischen die Halbschalen und die Presshülse als axiale Widerlager einsetzbar ist derart, dass eine axiale Verschiebung der Schlaucharmatur zu den Halbschalen hin ausgeschlossen ist. Bei der erfindungsgemäßen Ausführung ist es nämlich ausreichend, dass der Schutzschlauch mittels einer in an sich bekannter Weise auf der Hülse der Schlaucharmatur aufgebrachten Presshülse an der Schlauchhülse befestigt wird. Selbst wenn beispielsweise der Nippel unter dem Flanschring abbricht, so wird der an die Schlaucharmatur angeschlossene Schlauch, vorzugsweise Hochdruckschlauch, immer noch durch die Halbschalen gehalten, so dass die Anschluss- und Verbindungsvorrichtung von dem Schutzschlauch nicht übergriffen sein muss.

Nach einem Ausführungsbeispiel der Erfindung ist vorgesehen, dass der Schutzschlauch aus einem flexiblen und dehnbaren Material besteht. Damit ist gewährleistet, dass bei einer zu hohen, auf die Schlauchleitung einwirkenden Zugkraft jeweils der starrer ausgebildete innere Hochdruckschlauch zunächst reißt und der flexible Schutzschlauch mit der Schlaucharmatur verbunden bleibt.

In der Zeichnung sind Ausführungsbeispiele der Erfindung wiedergegeben, welche nachstehend beschrieben sind. Es zeigen:
- Fig. 1: eine Verbindung für zwei Schlauchleitungsenden im Schnitt vor Druckeinwirkung in der Freigabestellung der Anschluss- und Verbindungsvorrichtung,
- Fig. 2: den Gegenstand der Figur 1 in der Verriegelungsstellung der Anschluss- und Verbindungsvorrichtung unter Druckeinwirkung,

- Fig. 3: die Einzelheit III aus Figur 2,
- Fig. 4: die Anschluss- und Verbindungsvorrichtung gemäß Figur 1 in einer Ansicht mit in ihrer geschlossenen Stellung befindlichen Halbschalen,
- Fig. 5: den Gegenstand der Figur 4 in einer anderen Ausführungsform,
- Fig. 6: den Gegenstand der Figur 4 beziehungsweise 5 in einer weiteren Ausführungsform,
- Fig. 7: den Gegenstand der Figur 6 im Schnitt,
- Fig. 8: ein weiteres Ausführungsbeispiel der Verbindung der beiden Halbschalen gemäß Figuren 4 bis 7,
- Fig. 9: eine Anschlussvorrichtung für eine Schlauchleitung an einem Arbeitsgerät im Schnitt,
- Fig. 10: den Gegenstand der Figur 9 in einer anderen Ausführungsform,
- Fig. 11: ein anderes Ausführungsbeispiel der Anschlussvorrichtung gemäß Figur 9,
- Fig. 12: eine Schlaucharmatur mit einer auf deren offenes Ende aufgesteckten Schutzkappe im Schnitt,
- Fig. 13: den Gegenstand der Figur 12 mit auf den Hülsenbereich der Schlaucharmatur aufgesteckter Schutzkappe,
- Fig. 14: den Gegenstand der Figur 12 in einer anderen Ausführungsform mit einer axial auf dem Hülsenabschnitt der Schlaucharmatur fixierten Schutzkappe,
- Fig. 15: die Schutzkappe gemäß Figur 14 in einer perspektivischen Einzeldarstellung,
- Fig. 16: den Gegenstand der Figur 14 in einer Perspektivansicht,
- Fig. 17: die Anschluss- und Verbindungsvorrichtung gemäß Figur 14 unter Einbeziehung eines äußeren Schutzschlauches,
- Fig. 18: den Gegenstand der Figur 17 in einer Perspektivansicht.

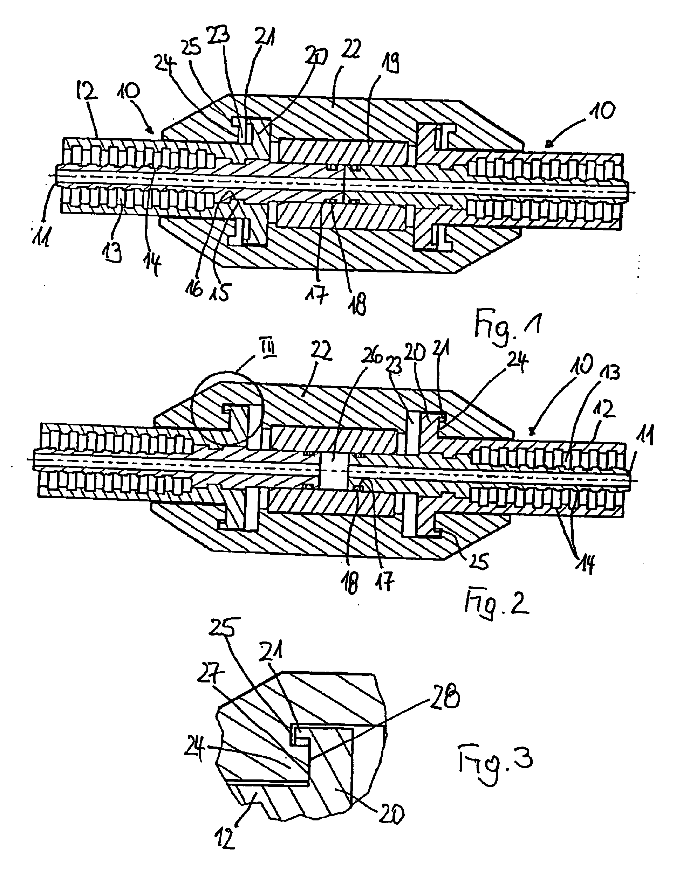

Wie sich zunächst aus Figur 1 ergibt, sind zwei Schlaucharmaturen 10 von nicht weiter dargestellten Hochdruckschlauchleitungen miteinander zu verbinden. Jede Schlaucharmatur 10 besteht aus einem in die Innenseele eines nicht dargestellten Schlauchkörpers einzuschiebenden Nippel 11 und einer äußeren Hülse 12. Zwischen Nippel 11 und Hülse 12 befindet sich ein Ringraum 13 zur Aufnahme des Schlauchkörpers, wobei auf der Außenseite des Nippels 11 wie auch an der Innenseite der Hülse 12 Verzahnungen 14 ausgebildet sind, die bei einer Verpressung der Hülse 12 mit dem Schlauchkörper sich jeweils in den Schlauchkörper eingraben und dadurch eine feste Verbindung zwischen der Schlaucharmatur 10 und dem Schlauchkörper herstellen.

In dem über den Ringraum 13 zur Aufnahme des Schlauchkörpers vorstehenden Bereich ist die Hülse 12 mit einem in eine am Nippel 11 ausgebildete Nut 16 einpressbaren Vorsprung 15 versehen, so dass auch hierdurch die feste Verbindung zwischen dem Nippel 11 und der Hülse 12 unterstützt wird. An seinem äußersten vorderen Ende weist der Nippel 11 eine weitere Nut 17 zur Aufnahme eines darin eingelegten Dichtungsringes 18 auf. Mit diesem vorderen Ende und dem darauf sitzenden Dichtungsring 18 sind die beiden Nippel 11 der beiden zu verbindenden Schlaucharmaturen 10 von beiden Seiten her in eine zentral angeordnete Aufnahmebuchse 19 eingeschoben, bis die beiden Nippel 11 stirnseitig aneinander stoßen.

An ihrem stirnseitigen Ende weisen die beiden Hülsen 12 jeweils als einstückigen Bestandteil einen radial davon abstehenden Flanschring 20 auf, der an seinem äußeren Umfang einen in Richtung der Schlaucharmatur 10 ausgerichteten Vorsprung 21 hat.

Die beiden Flanschringe 20 nebst dazwischen liegender Aufnahmebuchse 19 sind von zwei außen aufgesetzten Halbschalen 22 umschlossen, wobei sich die Halbschalen 22 noch über einen Teilbereich der jeweiligen Hülse 12 der Schlaucharmatur 10 erstrecken. In ihrem Inneren bilden die beiden zusammengesetzten Halbschalen 22 eine Aufnahmeausnehmung 23 aus, die zur passenden Aufnahme des Flanschringes 20 mit Vorsprung 21 der Schlaucharmatur 10 eingerichtet ist. Die Aufnahmeausnehmung 23 hat dabei eine solche axiale Erstreckung, dass die beiden Flanschringe 20 darin um ein gewisses Maß axial verschiebbar sind, wie noch erläutert wird. An ihrer dem Vorsprung 21 des Flanschringes 20 zugewandten Stirnseite 24 weisen die beiden Halbschalen 22 jeweils eine Nut 25 zur Aufnahme des Vorsprunges 21 auf.

Die Figur 1 zeigt dabei die Ausgangs- beziehungsweise Montagestellung der Anschluss- und Verbindungsvorrichtung, in welcher die Halbschalen 22 außen um die beiden miteinander zu verbindenden Schlaucharmaturen 10 und die dazwischen liegende Aufnahmebuchse 19 gestülpt sind, davon in der in Figur 1 dargestellten Stellung aber auch wieder abgenommen werden können, so dass die Verbindung der beiden Schlaucharmaturen lösbar ist.

Figur 2 zeigt nun einen weiteren Montageschritt, indem die beiden Schlaucharmaturen 10 jeweils nach außen verschoben sind, bis ihre an den Flanschringen 20 befindlichen Vorsprünge 21 in die zugeordneten Nuten 25 der Halbschalen 22 eingreifen. Hierdurch bewegen sich auch die Nippel 11 auseinander, und es entsteht ein Zwischenraum 26 im Inneren der Aufnahmebuchse 19. Wird nun die so montierte Anschluss- und Verbindungsvorrichtung unter Druck gesetzt, so führt der jeweils axial in dem Zwischenraum 26 einwirkende Druck zum Einpressen des jeweiligen Vorsprungs 21 in die zugeordnete Nut 25 der Halbschale 22, wie dies im einzelnen in Figur 3 dargestellt ist. Aufgrund der Gestaltung ergibt sich an der zugeordneten Stirnseite 24 der Halbschalen 22 ein Vorsprung 27, der in einen durch die Ausbildung des Vorsprungs 21 an dem Flanschring 20 gebildeten Rücksprung 28 eingreift. Vorsprung 27 und Rücksprung 28 bilden somit gemeinsam eine Verriegelung für die äußeren Halbschalen 22 mit der Hülse 12 beziehungsweise deren Flanschring 20 derart, dass in der unter Druck stehenden eingepressten Stellung die Halbschalen 22 nicht nach außen öffenbar sind. Damit ist eine sichere Verbindung der beiden Schlaucharmaturen 10 miteinander hergestellt, die in drucklosem Zustand einfach zu lösen ist, indem die beiden Schlaucharmaturen 10 in die in Figur 1 dargestellte Stellung axial zurück verschoben werden.

Obwohl es ausreichend ist, wenn die beiden Halbschalen 22 allein durch den Anpressdruck in Position gehalten sind, kann es zweckmäßig sein, für eine zusätzliche Festlegung der Halbschalen 22 aneinander zu sorgen.

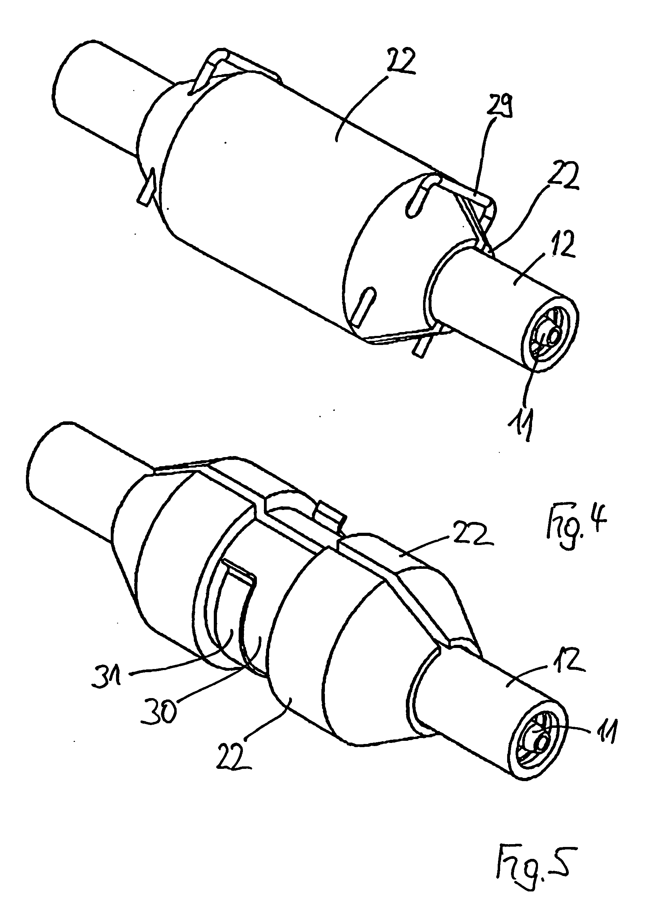

Hierzu zeigt Figur 4 in einem ersten Ausführungsbeispiel die Anordnung von U-förmigen Federsteckern 29, die jeweils so durch die beiden Halbschalen 22 geführt sind, dass die Halbschalen 22 aneinander festgelegt sind.

Eine alternative Möglichkeit ist in Figur 5 dargestellt. Hierzu weisen die beiden Halbschalen 22 eine Einziehung 30 auf, in der eine die Halbschalen 22 außen umgreifende vorgebogene Federklammer 31 angeordnet ist, die jedenfalls für eine Fixierung der Halbschalen 23 aneinander sorgt.

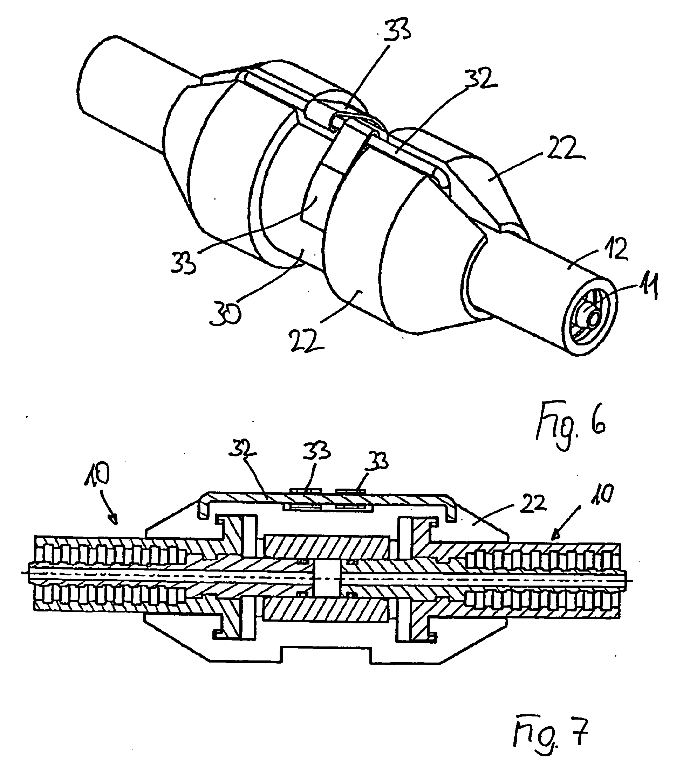

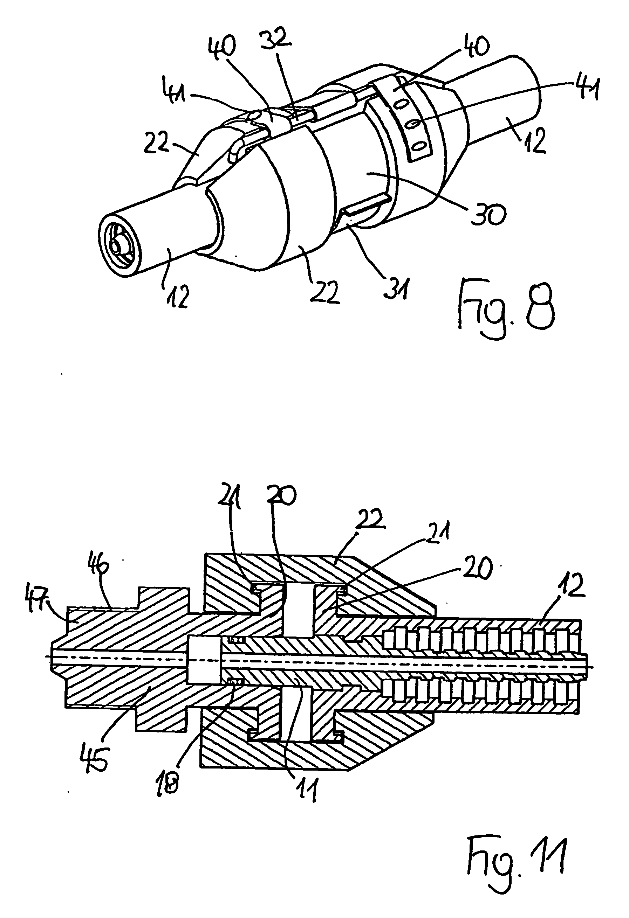

Eine wiederum andere Ausführungsform ist in Figuren 6 und 7 dargestellt, indem die beiden Halbschalen 22 mittels einer außenliegenden Scharnierachse 32 aneinander gehaltert sind. An der Scharnierachse 32 können Federblätter 33 schwenkbar gelagert sein, die ihrerseits mit Vorspannung auf die Halbschalen 22 drücken und diese in der geschlossenen Stellung festlegen. Figur 8 zeigt eine Ausführungsform, die aus einer Kombination der in Figuren 5 beziehungsweise 6 und 7 dargestellten Ausführungsformen besteht. Die Halbschalen 22 werden wiederum von einer in einer Einziehung 30 angeordneten vorgebogenen Federklammer 31 zusammengehalten, wobei ein Ende der Federklammer 31 an einer entsprechend angeordneten Scharnierachse 32 schwenkbar gehaltert ist. Die Scharnierachse 32 ist jeweils in an den beiden Halbschalen 22 mittels Schweißpunkten 41 angebrachten Scharnierbändern 40 gehalten.

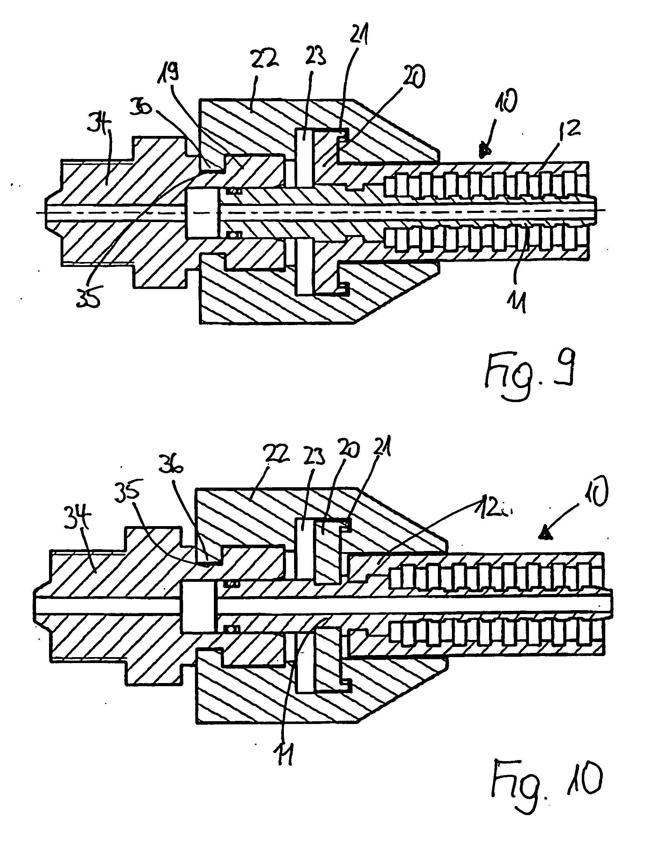

Wie sich aus den Figuren 9 und 10 ergibt, kann die erfindungsgemäße Anschluss- und Verbindungsvorrichtung auch zur Festlegung einer an dem Ende eines anzuschließenden Hochdruckschlauches angebrachten Schlaucharmatur 10 an einem nicht weiter dargestellten Hochdruckarbeitsgerät ausgelegt sein. In diesem Fall bildet die Aufnahmebuchse 19 einen Bestandteil eines Anschlusses 34 des nicht weiter dargestellten Arbeitsgeräts, wobei die Halbschalen 22 mit einem an ihrem axialen Ende ausgebildeten Haken 36 in eine auf dem äußeren Umfang der Aufnahmebuchse 19 ausgebildete Nut 35 eingreifen. Damit sind die Halbschalen 22 wiederum axial unverrückbar festgelegt, so dass sie als Widerlager für den Eingriff des Flanschringes 20 mit Vorsprung 21 dienen können, wie insbesondere zu Figuren 1 bis 3 beschrieben.

Das in Figur 10 dargestellte Ausführungsbeispiel unterscheidet sich von dem in Figur 9 dargestellten Ausführungsbeispiel dadurch, dass der Flanschring 20 mit Vorsprung 21 sich nicht mehr an der Hülse 12 befindet, sondern unmittelbar auf den Nippel 11 aufgebracht und mit diesem fest verbunden, beispielsweise daran angeschweißt ist. Diese andere Befestigung des Flanschringes 20 hat aber keine Auswirkungen auf die beschriebene Funktion der erfindungsgemäßen Anschluss- und Verbindungsvorrichtung.

Bei dem in Figur 11 dargestellten Ausführungsbeispiel bildet einen Bestandteil der erfindungsgemäßen Anschluss- und Verbindungsvorrichtung ein Adapter 45, der mit seinem freien Ende 47 eine Anschlussmöglichkeit bietet. So kann das freie Ende 47 des Adapters 45 mit einem Außengewinde 46 zum Einschrauben des Adapters in einen an einem Arbeitsgerät ausgebildeten Anschluss ausgebildet sein. Alternativ ist es aber auch möglich, das freie Ende 47 entsprechend hohl auszubilden und mit einem Innengewinde zu versehen, so dass eine mit einem Standard-Schraubverschluss versehene Schlauchleitung an den Adapter 45 anschließbar ist. Dem Adapter 45 kommt in seinem von den Halbschalen 22 umgriffenen Bereich gleichzeitig die Funktion der Aufnahmehülse 19 bei den zuvor beschriebenen Ausführungsbeispielen der Erfindung zu, indem der Nippel 11 mit dem darauf sitzenden Dichtungsring 18 in den Adapter 45 einschiebbar ist. Stirnseitig ist an dem Adapter 45 vorzugsweise einstückig der Flanschring 20 mit dem in die Halbschalen 22 eingreifenden Vorsprung 21 angeordnet, und insoweit entspricht der Adapter 45 in seiner Handhabung im Rahmen der Anschluss-und Verbindungsvorrichtung dem beispielsweise zu Figuren 1 bis 3 beschriebenen Ausführungsbeispiel.

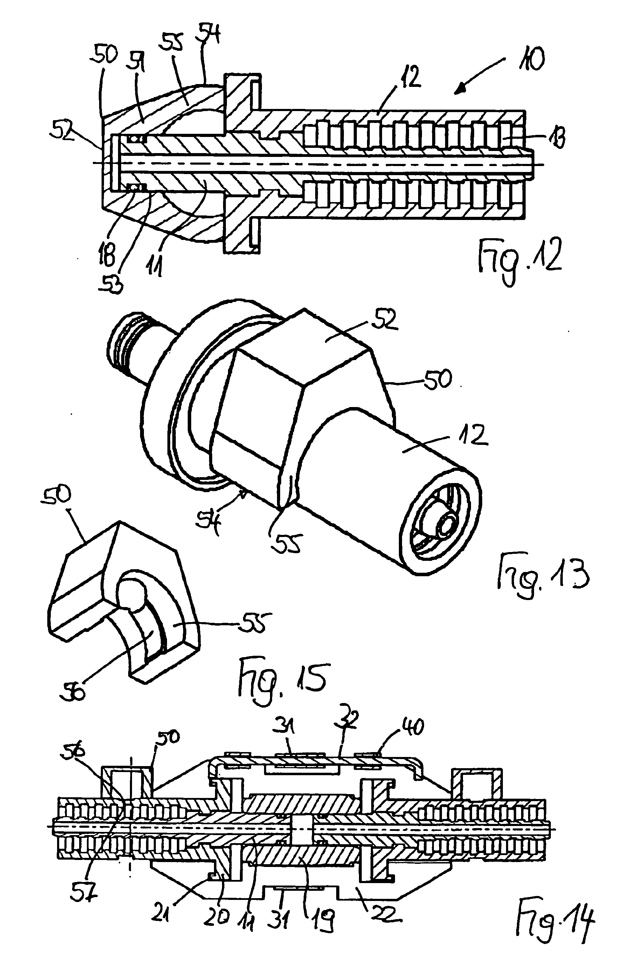

Es ist üblich, derartige Schlaucharmaturen 10 an ihrem freien Ende vor der Montage durch Aufsetzen einer Schutzkappe zu schützen, und insoweit umfasst die erfindungsgemäße Anschluss- und Verbindungsvorrichtung gemäß Figur 12 eine derartige Schutzkappe 50. Diese in an sich bekannter Weise hutförmig ausgebildete Schutzkappe 50 weist ausgehend von ihrem geschlossenen Deckelbereich 52 einen ersten Schutzbereich 51 auf, mit welchem die Schutzkappe 50 auf den Nippel 11 der Schlauchgarnitur 10 aufsteckbar ist. Bei dem dargestellten Ausführungsbeispiel besteht der Schutzbereich 51 aus einem innenseitig von dem geschlossenen Deckelbereich 52 vorspringenden Ansatz 53, der zum Aufstecken auf den Nippel 11 der Schlaucharmatur 10 eingerichtet ist. Axial an den Schutzbereich 21 schließt ein Haltebereich 54 an, der nach außen ausgewölbte Wandungsbereiche 55 der Schutzkappe 50 aufweist, die bei einer federnden Ausbildung so geformt und eingerichtet sind, dass die Schutzkappe 50 nach dem Abziehen von dem Nippel 11 auf die Hülse 12 der Schlaucharmatur 10 aufsteckbar und dadurch an der Schlaucharmatur 10 festlegbar ist. Insofern ist die Schutzkappe 50 bei montierter Schlauchgarnitur an der Schlauchgarnitur 10 selbst festgehalten und steht bei einer weiteren Handhabung der Schlauchgarnitur 10 für eine erneute Schutzfunktion zur Verfügung, wie aus Figur 13 ersichtlich.

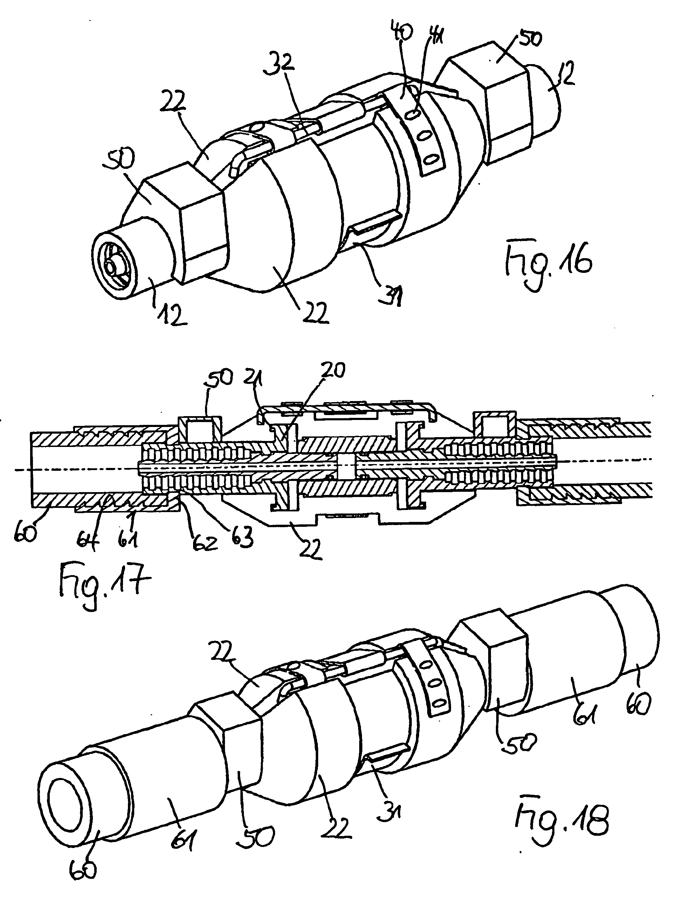

Der Schutzkappe 50 kann gemäß dem in den Figuren 14 und 15 dargestellten Ausführungsbeispiel noch eine weitere Funktion gegeben werden, wenn die Schutzkappe 50 im Bereich ihrer ausgewölbten Wandungsbereiche 55 mit einem nach innen vorstehenden Vorsprung 56 versehen ist, dem eine am äußeren Umfang der Hülse 12 der Schlauchgarnitur 10 ausgebildete Nut 57 zugeordnet ist. Bei auf die Hülse 12 aufgesteckter Schutzkappe 50 ist bei Eingriff des Vorsprungs 56 in die Nut 57 die Schutzkappe 50 axial unverrückbar an der Schlauchgarnitur 10 festgelegt. Erfindungsgemäß ist vorgesehen, dass die Nut 57 an der Hülse 12 jeweils derart angeordnet ist, dass eine axiale Verschiebung der Schlaucharmatur 10 mit der darauf aufgesteckten Schutzkappe 50 zu den Halbschalen 22 hin ausgeschlossen ist. Da aber eine Verschiebung der Schlaucharmatur 10 zu den Halbschalen 22 hin für ein Lösen der Anschluss- und Verbindungsvorrichtung notwendig ist, ist mit einer derartigen Ausbildung gleichzeitig eine zusätzliche Sicherung der Anschluss- und Verbindungsvorrichtung gegen ein Lösen verwirklicht. Eine solche Anschluss- und Verbindungsvorrichtung ist in ihrer Gesamtheit in Figur 16 nochmals dargestellt.

Soweit insbesondere bei der Verwendung der Anschluss- und Verbindungsvorrichtung im Zusammenhang mit Hochdruckschläuchen in an sich bekannter Weise ein äußerer Schutzschlauch über den jeweiligen Hochdruckschlauch zu ziehen und an der Schlaucharmatur beziehungsweise der Anschluss- und Verbindungsvorrichtung festzulegen ist, gibt die erfindungsgemäße Anschluss- und Verbindungsvorrichtung die Möglichkeit, für eine entsprechend einfache Halterung eines Schutzschlauches 60 an der Anschluss- und Verbindungsvorrichtung zu sorgen. Aufgrund der Festlegung der miteinander zu verbindenden Schlaucharmaturen 10 durch die Halbschalen 22 reicht es aus, wenn der jeweilige Schutzschlauch 60 über die Hülse 12 jeder Schlaucharmatur 10 geschoben ist, so dass diese Hülse 12 beziehungsweise die Schlaucharmatur 10 wie ein Nippel einer Schlauchverbindung wirken. Der außen auf die Hülse 12 aufgeschobene Schutzschlauch 60 wird auf der Hülse 12 mittels einer äußeren Presshülse 61 festgelegt, die in an sich bekannter Weise mit einem stirnseitigen Vorsprung 62 in eine in der Hülse 12 ausgebildete Nut 63 eingreift und dadurch axial unverschieblich festgelegt ist. Mittels einer innenseitig ausgebildeten Verzahnung 64 hält die Presshülse 61 den Schutzschlauch 60 fest. Auch bei einer solchen Ausgestaltung kann die axiale Fixierung der einzusetzenden Schutzkappen 50 für eine zusätzliche Sicherung der Anschluss- und Verbindungsvorrichtung gegen ein Lösen genutzt werden, und hierzu sind die Lage der auf der Hülse 12 angebrachten Presshülse 61 und die Breite der Schutzkappe 50 derart aufeinander abgestimmt, dass durch die zwischen die Halbschalen 22 und die Presshülse 61 eingesetzte Schutzkappe 50 ein axiales Verschieben der Schlaucharmatur 10 in die Halbschalen 22 hinein ausgeschlossen ist.

## Patentansprüche

1. Anschluss- und Verbindungsvorrichtung für Hochdruckleitungen zum Anschluss einer Schlauchleitung an eine weitere Schlauchleitung oder an ein Hochdruckarbeitsgerät, wobei das Ende der Schlauchleitung mit einer Schlaucharmatur (10) versehen ist, die aus einem in die Innenseele eines Schlauchkörpers einschiebbaren Nippel (11) und einer auf die Außenseite des Schlauchkörpers aufgesetzten, mit dem Nippel verbindbaren und auf den Schlauchkörper aufpressbaren Hülse (12) besteht, wobei die mit dem Schlauchkörper verbundene Schlaucharmatur (10) einen radial abstehenden Flanschring (20) aufweist und das aus dem Schlauchkörper hervorstehende Ende des Nippels (11) eine auf seinem äußeren Umfang aufgesetzte Dichtung (18) aufweist und gemeinsam mit der Dichtung (18) in eine Aufnahmebuchse (19) einsteckbar ist und die Aufnahmebuchse (19) und der radial abstehende Flanschring (20) von zwei Aufnahmebuchse (19) und Flanschring (20) außen umfassenden Halbschalen (22) als Anschluss- und Verbindungsvorrichtung umfasst sind und wobei eine der Aufnahme des Flanschringes (20) dienende Ausnehmung (23) in den Halbschalen (22) derart bemessen ist, dass eine axiale Bewegung des Schlauchendes mit daran angebrachter Schlaucharmatur (10) zwischen einer Freigabestellung und einer durch formschlüssigen Eingriff des Flanschringes (20) mit einer stirnseitig an den Halbschalen (22) ausgebildeten Aufnahmegestaltung (25) gebildeten Verriegelungsstellung für die Halbschalen (22) ermöglicht ist, **dadurch gekennzeichnet, dass** die beiden Halbschalen (22) zusätzlich zu der Aufnahmebuchse (19) und dem Flanschring (20) einen an den Flanschring (20) anschließenden Abschnitt der äußeren Hülse (12) außen umfassen.

2. Anschluss- und Verbindungsvorrichtung nach Anspruch 1, **dadurch gekennzeichnet, dass** der Flanschring (20) mit einem axial in Richtung des Schlauchkörpers vorstehenden Vorsprung (21) in eine stirnseitig in den Halbschalen (22) ausgebildete Nut (25) als Aufnahmegestaltung eingreift.

3. Anschluss- und Verbindungsvorrichtung nach Anspruch 1, **dadurch gekennzeichnet, dass** der Flanschring (20) an dem stirnseitigen Ende der Hülse (12) angebracht ist.

4. Anschluss- und Verbindungsvorrichtung nach Anspruch 3, **dadurch gekennzeichnet, dass** der Flanschring (20) einstückiger Bestandteil der Hülse (12) ist.

5. Anschluss- und Verbindungsvorrichtung nach Anspruch 1 oder 2, **dadurch gekennzeichnet, dass** der Flanschring (20) an einem aus dem Schlauchkörper hervorstehenden Bereich des Nippels (11) zwischen der Hülse (12) und der Aufnahmebuchse (19) angebracht ist.

6. Anschluss- und Verbindungsvorrichtung nach einem der Ansprüche 1 bis 5, **dadurch gekennzeichnet, dass** die Aufnahmebuchse (19) eine solche Länge aufweist, dass das die Dichtung (18) aufweisende vordere Ende des Nippels (11) sowohl in der Freigabestellung als auch in der Verriegelungsstellung im Inneren der Aufnahmebuchse (19) gelegen ist.

7. Anschluss- und Verbindungsvorrichtung nach einem der Ansprüche 1 bis 6, **dadurch gekennzeichnet, dass** die beiden Aufnahmebuchse (19) und Flanschring (20) umgreifenden Halbschalen (22) mittels einer auf ihrem äußeren Umfang aufgesetzten gebogenen Federklammer (31) in ihrer geschlossenen Stellung zusammengehalten sind.

8. Anschluss- und Verbindungsvorrichtung nach einem der Ansprüche 1 bis 6, **dadurch gekennzeichnet, dass** die Halbschalen (22) mittels an ihren äußeren Enden radial durchgesteckter U-förmiger Federstecker (29) in ihrer geschlossenen Stellung zusammengehalten sind.

9. Anschluss- und Verbindungsvorrichtung nach einem der Ansprüche 1 bis 6, **dadurch gekennzeichnet, dass** die Halbschalen (22) mittels eines außenliegenden Scharniers (32) in ihrer geschlossenen Stellung zusammengehalten sind.

10. Anschluss- und Verbindungsvorrichtung nach Anspruch 9, **dadurch gekennzeichnet, dass** an der Scharnierachse (32) des Scharniers die Halbschalen (22) jeweils in ihre geschlossene Stellung vorspannende und mit den Halbschalen (22) verbundene Federblätter (33) gehaltert sind.

11. Anschluss- und Verbindungsvorrichtung nach Anspruch 10, **dadurch gekennzeichnet, dass** die Aufnahmebuchse (19) formschlüssig von den Halbschalen (22) umgriffen und darin axial unverschieblich festgelegt ist.

12. Anschluss- und Verbindungsvorrichtung nach einem der Ansprüche 1 bis 11 zur Verbindung zweier Schlauchleitungen, **dadurch gekennzeichnet, dass** die Halbschalen (22) die Flanschringe (20) der beiden Schlaucharmaturen (10) der zu verbindenden Schlauchleitungen einschließlich der dazwischen angeordneten Aufnahmebuchse (19) mit den darin eingeschobenen Nippeln (11) umgreifen und aneinander halten.

13. Anschluss- und Verbindungsvorrichtung nach einem der Ansprüche 1 bis 11 zur Verbindung einer Schlauchleitung mit einem Hochdruckarbeitsgerät, **dadurch gekennzeichnet, dass** die Aufnahmebuchse (19) mit dem Arbeitsgerät verbunden und die Halbschalen (22) in ihrer geschlossenen Stellung axial unverschieblich an der Aufnahmebuchse (19) oder an dem Arbeitsgerät festgelegt sind.

14. Anschluss- und Verbindungsvorrichtung nach einem der Ansprüche 1 bis 11, **dadurch gekennzeichnet, dass** die Aufnahmebuchse (19) als mit einem Arbeitsgerät oder mit einer einen Schraubanschluss aufweisenden Schlauchleitung verbindbarer Adapter (45) ausgebildet und an dem stirnseitigen Ende des Adapters der gemeinsam mit dem Flanschring (20) der Schlaucharmatur (10) von den Halbschalen (22) umgriffene Flanschring (20) angebracht ist.

15. Anschluss- und Verbindungsvorrichtung nach Anspruch 14, **dadurch gekennzeichnet, dass** an dem freien Ende (47) des Adapters (45) ein Außengewinde angebracht ist.

16. Anschluss- und Verbindungsvorrichtung nach Anspruch 14, **dadurch gekennzeichnet, dass** an dem freien Ende (47) des Adapters (45) ein Innengewinde ausgebildet ist.

17. Anschluss- und Verbindungsvorrichtung nach einem der Ansprüche 1 bis 16, **dadurch gekennzeichnet, dass** eine an der Schlaucharmatur (10) abnehmbar gehalterte Schutzkappe (50) zum Abdecken des offenen Endes der Schlaucharmatur (10) vorgesehen ist, und die hutförmige Schutzkappe (50) einen Schutzbereich (51) zum axialen umschließenden Aufstecken auf das offene Ende der Schlaucharmatur (10) und einen an den Schutzbereich (51) axial anschließenden Haltebereich (54) mit einem nach außen ausgewölbten Wandungsbereich (55) zum radialen Aufstecken der Schutzkappe (50) auf den äußeren Umfang eines Abschnitts der Hülse (12) der Schlaucharmatur (10) aufweist.

18. Anschluss- und Verbindungsvorrichtung nach Anspruch 17, **dadurch gekennzeichnet, dass** der Schutzbereich (51) aus einem innenseitig von dem geschlossenen Deckelbereich (52) vorspringenden Ansatz (53) zum Aufstecken auf das Ende der Schlaucharmatur (10) besteht.

19. Anschluss- und Verbindungsvorrichtung nach Anspruch 17 oder 18, **dadurch gekennzeichnet, dass** die nach außen ausgewölbten Wandungsbereiche (55) der Schutzkappe (50) federnd ausgebildet sind.

20. Anschluss- und Verbindungsvorrichtung nach einem der Ansprüche 17 bis 19, **dadurch gekennzeichnet, dass** die hutförmige Schutzkappe (50) mittels jeweils eines an der Innenseite ihrer Wandungsbereiche (55) angeordneten und in eine auf der Außenseite der Hülse (12) ausgebildete Nut (57) eingreifenden Vorsprungs (56) in ihrer auf die Schlaucharmatur (10) aufgesteckten Lage axial fixiert und die Nut (57) an der Hülse (12) derart angeordnet ist, dass eine axiale Verschiebung der Schlaucharmatur (10) mit der darauf aufgesteckten Schutzkappe (50) zu den Halbschalen (22) hin ausgeschlossen ist.

21. Anschluss- und Verbindungsvorrichtung nach einem der Ansprüche 17 bis 20, **dadurch gekennzeichnet, dass** ein die Hochdruckleitung mit der daran angeschlossenen Schlaucharmatur (10) außen umfassender Schutzschlauch (60) vorgesehen ist, der mit seinem zugeordneten Ende über den von den Halbschalen (22) hervorstehenden Bereich der Hülse (12) der Schlaucharmatur (10) geschoben und darauf mittels einer außen aufgebrachten Presshülse (61) festgelegt ist, und dass die Breite der Schutzkappe (50) und die Lage der auf der Hülse (12) angebrachten Presshülse (61) derart aufeinander abgestimmt sind, dass die Schutzkappe (50) zwischen die Halbschalen (22) und die Presshülse (61) als axiale Widerlager einsetzbar ist derart, dass eine axiale Verschiebung der Schlaucharmatur (10) zu den Halbschalen (22) hin ausgeschlossen ist.

22. Anschluss- und Verbindungsvorrichtung nach Anspruch 21, **dadurch gekennzeichnet, dass** der Schutzschlauch (60) aus einem flexiblen und dehnbaren Material besteht.

## Claims

1. A joining and connecting device for high-pressure lines for joining a hose line to a further hose line or to a high-pressure working implement, wherein the end of the hose line is provided with a hose fitting (10) that consists of a nipple (11) that can be slid into the inner core of a hose body, and of a sleeve (12) that is fitted onto the outer side of the hose body and can be connected to the nipple and pressed onto the hose body, wherein the hose fitting (10) connected to the hose body has a radially protruding flange ring (20), and that end of the nipple (11) that protrudes out of the hose body has a seal (18) that is fitted on the outer circumference thereof and can be inserted together with the seal (18) into a receiving bush (19), and the receiving bush (19) and the radially protruding flange ring (20) are surrounded by two half shells (22) that surround the receiving bush (19) and the flange ring (20) on the outside as a joining and connecting device, and wherein a recess (23) in the half shells (22), which recess serves for receiving the flange ring (20), is dimensioned such that an axial movement of the hose end with the hose fitting (10) attached thereto is enabled between a release position and a locking position for the half shells (22), said locking position being formed by the form-fitting engagement of the flange ring (20) with a receiving configuration (25) formed on the front sides of the half shells (22), **characterized in that** the two half shells (22), in addition to the receiving bush (19) and the flange ring (20), surround the outside of a section of the outer sleeve (12), which section adjoins the flange ring (20).

2. The joining and connecting device according to claim 1, **characterized in that** the flange ring (20) engages with a protrusion (21) protruding axially in the direction of the hose body into a groove (25) formed as a receiving configuration in the front sides of the half shells (22).

3. The joining and connecting device according to claim 1, **characterized in that** the flange ring (20) is attached on the front-side end of the sleeve (12).

4. The joining and connecting device according to claim 3, **characterized in that** the flange ring (20) is an integral part of the sleeve (12).

5. The joining and connecting device according to claim 1 or claim 2, **characterized in that** the flange ring (20) is attached to a region of the nipple (11), which region protrudes out of hose body, between the sleeve (12) and the receiving bush (19).

6. The joining and connecting device according to any one of the claims 1 to 5, **characterized in that** the receiving bush (19) has such a length that the front end of the nipple (11), which front end has the seal (18), is positioned inside the receiving bush (19) in the release position as well as in the locking position.

7. The joining and connecting device according to any one of the claims 1 to 6, **characterized in that** the two half shells (22) surrounding the receiving bush (19) and the flange ring (20) are held together in their closed position by means of a bent spring clip (31) fitted on the outer circumference of the half shells.

8. The joining and connecting device according to any one of the claims 1 to 6, **characterized in that** the half shells (22) are held together in their closed position by means of U-shaped spring cotter pins (29) radially inserted through the outer ends of the half shells.

9. The joining and connecting device according to any one of the claims 1 to 6, **characterized in that** the half shells (22) are held together in their closed position by means of an outer hinge (32).

10. The joining and connecting device according to claim 9, **characterized in that** at the hinge axis (32) of the hinge, the half shells (22) are each held in spring leafs (33) which preload said half shells into their closed position and are connected to the half shells (22).

11. The joining and connecting device according to claim 10, **characterized in that** the receiving bush (19) is surrounded by the half shells (22) in a form-locking manner and is fixed therein in an axially undisplaceable manner.

12. The joining and connecting device according to any one of the claims 1 to 11 for connecting two hose lines, **characterized in that** the half shells (22) engage around the flange rings (20) of the two hose fittings (10) of the hose lines to be connected, including the receiving bush (19) arranged therebetween with the nipples (11) slid therein, and keep them together.

13. The joining and connecting device according to any one of the claims 1 to 11 for connecting a hose line to a high-pressure working implement, **characterized in that** the receiving bush (19) is connected to the working implement, and the half shells (22), in their closed position, are fixed on the receiving bush (19) or on the working implement in an axially undisplaceable manner.

14. The joining and connecting device according to any one of the claims 1 to 11, **characterized in that** the receiving bush (19) is formed as an adaptor (45) that can be connected to a working implement or to a hose line having a screw connection, and at the front-side end of the adaptor, the flange ring (20) is attached which, together with the flange ring (20) of the hose fitting (10), is surrounded by the half shells (22).

15. The joining and connecting device according to claim 14, **characterized in that** an external thread is provided on the free end (47) of the adaptor (45).

16. The joining and connecting device according to claim 14, **characterized in that** an internal thread is provided on the free end (47) of the adaptor (45).

17. The joining and connecting device according to any one of the claims 1 to 16, **characterized in that** on the hose fitting (10), a removably held protective cap (50) for covering the open end of the hose fitting (10) is provided, and the hat-shaped protective cap (50) has a protective region (51) for axial and enclosing attaching onto the open end of the hose fitting (10), and further has a holding region (54) axially adjoining the protective region (51), which holding region has an outwardly curved wall region (55) for radially attaching the protective cap (50) onto the outer circumference of a section of the sleeve (12) of the hose fitting (10).

18. The joining and connecting device according to claim 17, **characterized in that** the protective region (51) consists of a projection (53) for attaching onto the end of the hose fitting (10), which projection protrudes on the inside from the closed cover region (52).

19. The joining and connecting device according to claim 17 or claim 18, **characterized in that** the outwardly curved wall regions (55) of the protective cap (50) are formed spring-elastically.

20. The joining and connecting device according to any one of the claims 17 to claim 19, **characterized in that** the hat-shaped protective cap (50), in its position attached onto the hose fitting (10), is axially fixed by means of a protrusion (56) that is in each case arranged on the inner side of the wall regions (55) of the protective cap and engages into a groove (57) formed on the outer side of the sleeve (12), and the groove (57) is arranged on the sleeve (12) in such a manner that an axial displacement of the hose fitting (10) with the protective cap (50) attached thereon toward the half shells (22) is impossible.

21. The joining and connecting device according to any one of the claims 17 to claim 20, **characterized in that** a protective hose (60) is provided which surrounds the outside of the high-pressure line with the hose fitting (10) connected thereto, which protective hose is slid with its associated end over that region of the sleeve (12) of the hose fitting (10) that protrudes from the half shells (22) and is fixed thereon by means of a pressing sleeve (61) fitted on the outside, and that the width of the protective cap (50) and the position of the pressing sleeve (61) fitted on the sleeve (12) are matched to one another in such a manner that the protective cap (50) can be inserted as a axial counter bearing between the half shells (22) and the pressing sleeve (61) in such a manner that an axial displacement of the hose fitting (10) toward the half shells (22) is impossible.

22. The joining and connecting device according to claim 21, **characterized in that** the protective hose (60) consists of a flexible and stretchable material.

## Revendications

1. Dispositif de raccordement et de connexion pour condultes haute pression pour le raccordement d'une conduite souple à une autre conduite souple ou à un appareil de travail haute pression, l'extrémité de la conduite souple étant pourvue d'un raccord pour conduite souple (10) qui se compose d'un nipple (11) insérable dans l'âme intérieure d'un corps de conduite souple et une douille (12) placée sur le côté extérieur du corps de conduite souple, reliable au nipple et pouvant être engagée par pression sur le corps de conduite souple, le raccord pour conduite souple (10) relié au corps de conduite souple présentant un anneau de bride (20) dépassant radialement et l'extrémité dépassant du corps de conduite souple du nipple (11) présentant une garniture (18) placée sur sa périphérie extérieure et pouvant être enfichée conjointement avec la garniture (18) dans une douille de réception (19) et la douille de réception (19) et l'anneau de bride dépassant radialement (20) sont contenus par deux demi-coques (22) comportant à l'extérieur la douille de réception (19) et l'anneau de bride (20) comme dispositif de raccordement et de connexion, et un évidement (23) servant à la réception de l'anneau de bride (20) dans les demi-coques (22) étant dimensionné de telle manière qu'un déplacement axial de l'extrémité de conduite souple avec un raccord pour conduite souple (10) monté dessus entre une position de libération et une position de verrouillage formée par l'engagement à complémentarité de formes de l'anneau de bride (20) avec une forme de réception (25) réalisée côté avant sur les demi-coques (22) pour les demi-coques (22) soit permis, **caractérisé en ce que** les deux demi-coques (22) comportent à l'extérieur outre la douille de réception (19) et l'anneau de bride (20), une section contiguë à l'anneau de bride (20) de la douille extérieure (12).

2. Dispositif de raccordement et de connexion selon la revendication 1, **caractérisé en ce que** l'anneau de bride (20) s'engage avec une saillie (21) dépassant axialement en direction du corps de conduite souple dans une rainure (25) réalisée côté avant dans les demi-coques (22) comme forme de réception.

3. Dispositif de raccordement et de connexion selon la revendication 1, **caractérisé en ce que** l'anneau de bride (20) est monté sur l'extrémité côté avant de la douille (12).

4. Dispositif de raccordement et de connexion selon la revendication 3, **caractérisé en ce que** l'anneau de bride (20) est un élément d'un seul tenant de la douille (12).

5. Dispositif de raccordement et de connexion selon la revendication 1 ou 2, **caractérisé en ce que** l'anneau de bride (20) est monté sur une zone dépassant du corps de conduite souple du nipple (11) entre la douille (12) et la douille de réception (19).

6. Dispositif de raccordement et de connexion selon l'une quelconque des revendications 1 à 5, **caractérisé en ce que** la douille de réception (19) présente une telle longueur que l'extrémité avant présentant la garniture (18) du nipple (11) est placée non seulement dans la position de libération mais aussi dans la position de verrouillage à l'intérieur de la douille de réception (19).

7. Dispositif de raccordement et de connexion selon l'une quelconque des revendications 1 à 6, **caractérisé en ce que** les deux demi-coques (22) entourant la douille de réception (18) et l'anneau de bride (20) sont maintenues à l'aide d'un étrier de ressort (31) plié placé sur leur périphérie extérieure dans leur position fermée.

8. Dispositif de raccordement et de connexion selon l'une quelconque des revendications 1 à 6, **caractérisé en ce que** les demi-coques (22) sont maintenues à l'aide de connecteurs de ressort (29) en forme de U enfichés radialement sur leurs extrémités extérieures dans leur position fermée.

9. Dispositif de raccordement et de connexion selon l'une quelconque des revendications 1 à 6, **caractérisé en ce que** les demi-coques (22) sont maintenues à l'aide d'une charnière (32) extérieure dans leur position fermée.

10. Dispositif de raccordement et de connexion selon la revendication 9, **caractérisé en ce que** des lames de ressort (33) reliées aux demi-coques (22) et précontraignant les demi-coques (22) respectivement dans leur position fermée sont maintenues sur l'axe (32) de la charnière.

11. Dispositif de raccordement et de connexion selon la revendication 10, **caractérisé en ce que** la douille de réception (19) est entourée par complémentarité de formes par les demi-coques (22) et est fixée de manière immobile axialement dedans.

12. Dispositif de raccordement et de connexion selon l'une quelconque des revendications 1 à 11 pour la connexion de deux conduites souples, **caractérisé en ce que** les demi-coques (22) entourent et maintiennent les uns sur les autres les anneaux de bride (20) des deux raccords (10) des conduites souples à relier, y compris la douille de réception (19) disposée au milleu avec les nipples (11) insérés dedans.

13. Dispositif de raccordement et de connexion selon l'une quelconque des revendications 1 à 11 pour la connexion d'une conduite souple avec un appareil de travail haute pression, **caractérisé en ce que** la douille de réception (19) est reliée à l'appareil de travail et les demi-coques (22) sont fixées dans leur position fermée de manière immobile axialement sur la douille de réception (19) ou sur l'appareil de travail.

14. Dispositif de raccordement et de connexion selon l'une quelconque des revendications 1 à 11, **caractérisé en ce que** la douille de réception (19) est réalisée comme un adaptateur (45) pouvant être relié à un appareil de travail ou à une conduite de tuyau présentant un raccord fileté et l'anneau de bride (20) entouré conjointement avec l'anneau de bride (20) du raccord pour conduite souple (10) par les demi-coques (22) est monté sur l'extrémité côté avant de l'adaptateur.

15. Dispositif de raccordement et de connexion selon la revendication 14, **caractérisé en ce qu'**un filetage extérieur est monté sur l'extrémité libre (47) de l'adaptateur (45).

16. Dispositif de raccordement et de connexion selon la revendication 14, **caractérisé en ce qu'**un filetage intérieur est réalisé sur l'extrémité libre (47) de l'adaptateur (45).

17. Dispositif de raccordement et de connexion selon l'une quelconque des revendications 1 à 16, **caractérisé en ce qu'**un couvercle protecteur (50) maintenu de manière amovible sur le raccord pour conduite souple est prévu pour le recouvrement de l'extrémité ouverte du raccord pour conduite souple (10), et le couvercle protecteur (50) en forme de chapeau présente une zone de protection (51) pour le placement par entourage axial sur l'extrémité ouverte du raccord pour conduite souple (10) et une zone de retenue (54) contiguë axialement à la zone de protection (51) avec une zone de paroi (55) courbée vers l'extérieur pour le placement radial du couvercle protecteur (50) sur la périphérie extérieure d'une section de la douille (12) du raccord pour conduite souple (10).

18. Dispositif de raccordement et de connexion selon la revendication 17, **caractérisé en ce que** la zone de protection (51) se compose d'une saillie (53) dépassant côté intérieur de la zone de couvercle (52) fermée pour le placement sur l'extrémité du raccord pour conduite souple (10).

19. Dispositif de raccordement et de connexion selon la revendication 17 ou 18, **caractérisé en ce que** les zones de paroi (55) courbées vers l'extérieur du couvercle protecteur (50) sont réalisées de manière élastique.

20. Dispositif de raccordement et de connexion selon l'une quelconque des revendications 17 à 19, **caractérisé en ce que** le couvercle protecteur (50) en forme de chapeau est fixé axialement respectivement à l'aide d'une saillie (56) s'engageant dans une rainure (57) réalisée sur le côté extérieur de la douille (12) et disposée sur le côté intérieur de ses zones de paroi (55) dans sa position placée sur le raccord pour conduite souple (10) et la rainure (57) est disposée sur la douille (12) de telle manière qu'un déplacement axial du raccord pour conduite souple (10) avec le couvercle protecteur (50) placé dessus vers les demi-coques (22) soit exclu.

21. Dispositif de raccordement et de connexion selon l'une quelconque des revendications 17 à 20, **caractérisé en ce qu'**un tuyau de protection (60) comportant à l'extérieur la conduite haute pression avec le raccord pour conduite souple (10) raccordé à celle-ci est prévu, lequel est poussé avec son extrémité associée sur la zone dépassant des demi-coques (22) de la douille (12) du raccord pour conduite souple (10) et est fixé dessus à l'aide d'une douille de pressage (61) appliquée à l'extérieur, et **en ce que** la largeur du couvercle protecteur (50) et la position de la douille de pressage (81) montée sur la douille (12) sont adaptées l'une à l'autre de telle manière que le couvercle protecteur (60) puisse être Inséré entre les demi-coques (22) et la douille de pressage (61) comme des contre-appuis axiaux de sorte qu'un déplacement axial du raccord pour conduite souple (10) vers les demi-coques (22) soit exclu.

22. Dispositif de raccordement et de connexion selon la revendication 21, **caractérisé en ce que** le tuyau de protection (60) se compose d'un matériau flexible et extensible.
